# EUROPÄISCHE PATENTSCHRIFT

(11) **EP 3 011 729 B1**
(45) Veröffentlichungstag und Bekanntmachung des Hinweises auf die Patenterteilung: **20.11.2019**
(21) Anmeldenummer: 14727753.7
(22) Anmeldetag: 16.05.2014
(51) Int. Cl.: G06T 3/40, H04N 13/239, H04N 5/232

(54) **SYSTEM UND VERFAHREN ZUM ZUSAMMENFÜGEN MITTELS MEHRERER OPTISCHER SENSOREN AUFGENOMMENER BILDER**
SYSTEM AND METHOD TO STITCH IMAGES FROM A PLURALITY OF OPTICAL SENSORS
SYSTEME ET PROCEDE D'ASSEMBLER DES IMAGES D'UNE PLURALITÉ DE CAPTEURS OPTIQUES

(30) Priorität: 17.06.2013 DE 102013211271
(43) Veröffentlichungstag der Anmeldung: 27.04.2016
(73) Patentinhaber: Robert Bosch GmbH, 70442 Stuttgart (DE)
(72) Erfinder: CANO, Raphael, 70180 Stuttgart (DE); ESPARZA GARCIA, Jose Domingo, 70372 Stuttgart (DE)
(86) Internationale Anmeldenummer: PCT/EP2014/060110
(87) Internationale Veröffentlichungsnummer: WO 2014/202296

(56) Entgegenhaltungen:
- DE-T2- 69 713 243
- DE-T2- 69 713 243
- US-A1- 2009 051 778
- US-A1- 2009 051 778
- US-A1- 2010 321 470
- US-A1- 2010 321 470
- US-B2- 7 079 173
- US-B2- 7 079 173
- US-B2- 7 889 948

## Beschreibung

### Stand der Technik

Die vorliegende Erfindung betrifft ein System sowie ein Verfahren zum Zusammenfügen mittels mehrerer optischer Sensoren aufgenommener Bilder. Insbesondere betrifft die vorliegende Erfindung Verbesserungen bei der Definition der Schnittstelle ("Naht") zwischen zwei Bildern.

Im Stand der Technik wird erheblicher Aufwand betrieben, eine geeignete Naht zum Zusammenfügen zweier Bilder zu definieren, mittels welcher beispielsweise Kamerabilder eines Fahrzeugs (2D- oder 3D-Systeme) zur Darstellung einer künstlichen Vogelperspektive synthetisiert werden. Hier kommt beispielsweise auch ein als "Alphablending" bekanntes Verfahren zum Einsatz. Typische Kriterien zur Auswahl der feststehenden Naht sind entweder ähnliche Pixelprojektionsbereiche in beiden Bildern oder ein gleicher Abstand zu jeder der beiden Kameras. Diese Vorgehensweise funktioniert für Umgebungen ohne nahegelegene Gegenstände oder Gegenstände, welche nicht direkt auf der Naht liegen, sehr gut. Bei nahegelegenen Objekten können insbesondere bei auf der Naht gelegenen Objekten viele Artefakte aufgrund der Tatsache auftreten, dass die Objekte sehr unterschiedlich in beiden Bildern dargestellt werden.

US 7,079,173 B2 offenbart ein System zur Aufnahme und Anzeige von Bildern, bei welchem mittels mehrerer Kameras aufgenommenes Bildmaterial an einer Fügelinie zusammengefügt wird. Über einen Entfernungssensor wird eine Objektdistanz eines in einem Überlappungsbereich befindlichen nächstgelegenen Objekts bestimmt. Im Ansprechen auf die Position des nächstgelegenen Objektes wird die Fügelinie derart angepasst, dass eine horizontale Öffnung der von den Kameras gelieferten Bilder angepasst wird, um das nächstgelegene Objekt nur auf dem Bild einer Kamera, nicht jedoch der anderen Kamera abzulichten.

DE 697 13 243 T2 offenbart ein Bilderzeugungsgerät, bei welchem mittels unterschiedlicher Objektive und aus unterschiedlichen Perspektiven aufgenommene geteilte Bilder derart zusammengesetzt werden, dass in einem paralaxen Bereich eine Vielzahl von Zwischenbildern erzeugt werden, wobei ein Überlappungsbereich unter Verwendung der Vielzahl erzeugter Zwischenbilder dargestellt werden.

US 2010/321470 A1 offenbart eine Bildgebungsvorrichtung, bei welcher in einem Überlappungsbereich zweier Bilder angeordnete Umgebungsobjekte dann mit einem Zebramuster als Anwenderinformation überlagert werden, wenn sie sich in einem Abstandsbereich unterhalb eines vordefinierten Abstandsbereiches befinden. Auf diese Weise wird dem Anwender mitgeteilt, dass ein Bildfehler im Zuge einer Bildsynthese zu erwarten ist.

Es ist eine Aufgabe der vorliegenden Erfindung, die im Stand der Technik bekannten Nachteile auszuräumen.

### Offenbarung der Erfindung

Die vorstehend genannte Aufgabe wird erfindungsgemäß durch ein Verfahren nach Anspruch 1 zum Zusammenfügen mittels mehrerer optischer Sensoren aufgenommener Bilder gelöst. Das Verfahren schlägt vor, ein erstes Bild mittels eines ersten optischen Sensors und ein zweites Bild mittels eines zweiten optischen Sensors aufzunehmen. Der optische Sensor kann dabei beispielsweise in einer digitalen Kamera eines Fahrerassistenzsystems eines Fortbewegungsmittels angeordnet sein. Anschließend werden optische Inhalte des ersten Bildes und des zweiten Bildes analysiert. Diese Analyse kann im Wesentlichen bekannte Bildverarbeitungsalgorithmen umfassen, mittels welcher beispielsweise auch bewegte Bilder untersucht werden können. Insbesondere kann aber auch eine zusätzliche Verwendung weiterer Signale erfolgen, mittels welchen Abstände der dargestellten Objekte von dem ersten optischen Sensor und/oder dem zweiten optischen Sensor ermittelt werden können. Anschließend schlägt das erfindungsgemäße Verfahren vor, eine neue Fügegrenze zum Zusammenfügen des ersten Bildes und des zweiten Bildes zu definieren. Als Fügegrenze sei im Rahmen der vorliegenden Erfindung ein Bereich innerhalb der Bilder verstanden, an welchen ein erster Ausschnitt eines ersten Bildes mit einem zweiten Ausschnitt eines zweiten Bildes verbunden wird. Erfindungsgemäß weicht die neue Fügegrenze aufgrund des Analyseergebnisses von einer zuvor verwendeten alten Fügegrenze ab. Mit anderen Worten verläuft die neue Fügegrenze anders, als die alte Fügegrenze. Mit anderen Worten wird vorgeschlagen, eine dynamische Neudefinition der Fügegrenze auf Basis analysierter Bildinhalte durchzuführen. Das Definieren der neuen Fügegrenze erfolgt aufgrund eines abgebildeten Objektes auf der zuvor verwendeten Fügegrenze, wobei das Objekt einen vordefinierten maximalen Abstand von dem aufnehmenden Sensor unterschreitet. Die Abstandsbestimmung kann dabei beispielsweise allein anhand der beiden optischen Sensoren erfolgen ("Stereoskopie"). Alternativ oder zusätzlich kann ein Signal eines Abstandssensors (z.B. Parkassistenzsystem auf Ultraschallbasis) verwendet werden und das Signal mit den Bildinhalten korreliert werden. Die als einen maximalen vordefinierten Abstand unterschreitenden Bildinhalte werden anschließend daraufhin untersucht, ob sie sich auf einer derzeit definierten Fügegrenze befinden. Ist dies der Fall, wird eine neue, besser geeignete Fügegrenze definiert und nachfolgenden Synthesevorgängen zugrunde gelegt. Auf diese Weise werden Artefakte auf den Abbildungen nahegelegener Objekte vermieden. Dies bietet den Vorteil, dass Artefakte bei der Darstellung eines synthetisierten Bildes reduziert werden können und sich ein Anwender des Syntheseergebnisses im Bild leichter orientieren kann.

Die Unteransprüche zeigen bevorzugte Weiterbildungen der Erfindung.

Bevorzugt wird dabei die neue Fügegrenze so definiert, dass auf ihr kein abgebildetes Objekt angeordnet ist, welches den vordefinierten maximalen Abstand unterschreitet. Mit anderen Worten kann die neue Fügegrenze z.B. verschoben, verformt oder an die Kontur des den vordefinierten maximalen Abstand unterschreitenden Objektes angeschmiegt werden, um die Objektkontur (zumindest teilweise) mit der Fügegrenze zusammenfallen zu lassen. Die vorstehend genannten Alternativen stellen dabei einfache Möglichkeiten dar, Artefakte aufgrund nahe gelegener Umgebungsobjekte bei der Bildsynthese zu verringern. Dabei kann der vordefinierte maximale Abstand des Umgebungsobjektes zum ersten Sensor und/oder zum zweiten Sensor und/oder zu dem Fortbewegungsmittel ermittelt werden, an welchem der erste Sensor und der zweite Sensor befestig sind. Zudem kann die Abbildungsgüte des Objektes durch den ersten Sensor bzw. den zweiten Sensor berücksichtigt werden, so dass beispielsweise ein Sensor geringerer Güte einen größeren maximalen vordefinierten Abstand verwendet als ein Sensor höherer Güte. Auf diese Weise kann verhindert werden, dass unnötige Neudefinitionen einer Fügegrenze erfolgen, falls ein höher auflösender Sensor ein nahegelegenes Umgebungsobjekt in einem Abstand noch gut abbilden kann, in welchem ein zweiter (geringer auflösender) Sensor keine geeignete Abbildungsqualität mehr bieten könnte.

Weiter bevorzugt umfasst das Analysieren eine Ermittlung (ausschließlich) eines Bereiches innerhalb des ersten Bildes, welcher einem entsprechenden Bereich des zweiten Bildes entspricht. Dabei kann die Entsprechung hinsichtlich eines Erfassungsbereiches des ersten und des zweiten Sensoren bestehen. Alternativ oder zusätzlich kann die Entsprechung inhaltlich, also hinsichtlich jeweiliger Bildbestandteile des ersten Sensors und des zweiten Sensors, bestehen. Auf diese Weise können Bildbereiche als potentielle Orte einer neuen Fügelinie ausgeklammert werden, welche für eine neue Fügelinie ohnehin keine hinreichende Eignung aufweisen.

Das erfindungsgemäße Verfahren kann besonders vorteilhaft in einem Fortbewegungsmittel zur Visualisierung einer Situation des
- Figur 1: eine schematische Draufsicht auf Komponenten eines Ausführungsbeispiels eines erfindungsgemäßen Systems;
- Figur 2: ein Flussdiagramm, veranschaulichend Schritte eines Ausführungsbeispiels eines erfindungsgemäßen Verfahrens;
- Figur 3: eine Aufnahme mittels einer Seitenkamera eines Fahrzeugs;
- Figur 4: eine Aufnahme einer Frontkamera eines Fahrzeugs;
- Figur 5: eine entzerrte Darstellung eines Abschnitts der in Figur 3 gezeigten Ansicht;
- Figur 6: ein Ausschnitt einer entzerrten Darstellung der in Figur 4 dargestellten Ansicht;
- Figur 7: eine Darstellung einer aus den Figuren 5 und 6 synthetisierten Ansicht;
- Figur 8: eine alternative Aufnahme mittels einer Seitenkamera eines Fahrzeugs;
- Figur 9: eine alternative Aufnahme einer Frontkamera eines Fahrzeugs;
- Figur 10: eine alternative entzerrte Darstellung eines Abschnitts der in Figur 8 gezeigten Ansicht;
- Figur 11: ein alternativer Ausschnitt einer entzerrten Darstellung der in Figur 9 dargestellten Ansicht; und
- Figur 12: eine alternative Darstellung einer aus den Figuren 10 und 11 synthetisierten Ansicht.

### Ausführungsformen der Erfindung

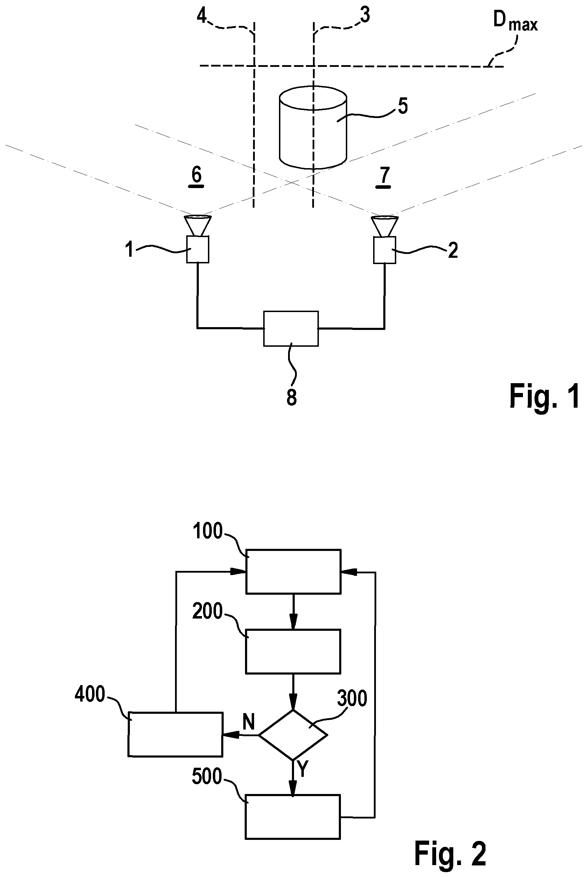

Figur 1 zeigt eine schematische Übersicht über Komponenten eines erfindungsgemäßen Systems. Das System umfasst eine erste Kamera 1 mit einem ersten optischen Sensor sowie eine zweite Kamera 2 mit einem zweiten optischen Sensor. Beide Kameras sind an eine Auswerteeinheit 8 angeschlossen, welche einen (nicht dargestellten) Prozessor und (nicht gestellte) Speichermittel umfasst. Die erste Kamera 1 hat einen ersten Erfassungsbereich 6, während die zweite Kamera 2 einen zweiten Erfassungsbereich 7 hat. In einem Überlappungsbereich der Erfassungsbereiche 6, 7 befindet sich ein Umgebungsobjekt 5 auf einer bisherigen Fügelinie 3. Da das Umgebungsobjekt 5 den vordefinierten maximalen Abstand Dₘₐₓ zu den Kameras 1, 2 unterschreitet, ist die bisher verwendete Fügelinie 3, welche durch das Umgebungsobjekt 5 verläuft, gemäß der vorliegenden Erfindung nicht mehr geeignet. Entsprechend wird eine neue Fügelinie 4 zum Zusammenfügen der mittels der Kameras 1, 2 aufgenommenen Bilder definiert, welche abseits des Umgebungsobjektes 5 verläuft.

Figur 2 zeigt Schritte eines Ausführungsbeispiels eines erfindungsgemäßen Verfahrens. Dabei wird im Schritt 100 ein erstes Bild mittels eines ersten optischen Sensors der Kamera 1 und ein zweites Bild mittels des zweiten optischen Sensors der zweiten Kamera 2 aufgenommen. Im Schritt 200 werden anschließend die Bilder analysiert. Dabei wird insbesondere festgestellt, dass sich ein Objekt mit einem Abstand < Dₘₐₓ auf einer bisher verwendeten Fügelinie 3 ("Fügegrenze") befindet. Ist dies nicht der Fall (N), wird die alte Fügelinie 4 im Schritt 400 verwendet, um die Bilder zu synthetisieren. Anschließend wird in Schritt 100 mit der Aufnahme weiterer Bilder fortgefahren. Ist ein nahegelegenes Objekt 5 (mit einem Abstand < Dₘₐₓ) auf einer bisher verwendeten Fügegrenze 3 entdeckt worden (Y), wird in Schritt 500 eine neue (besser geeignete) Fügegrenze 4 definiert und zur anschließenden Synthese der Kamerabilder verwendet. Anschließend wird mit der Aufnahme weiterer Bilder in Schritt 100 fortgefahren.

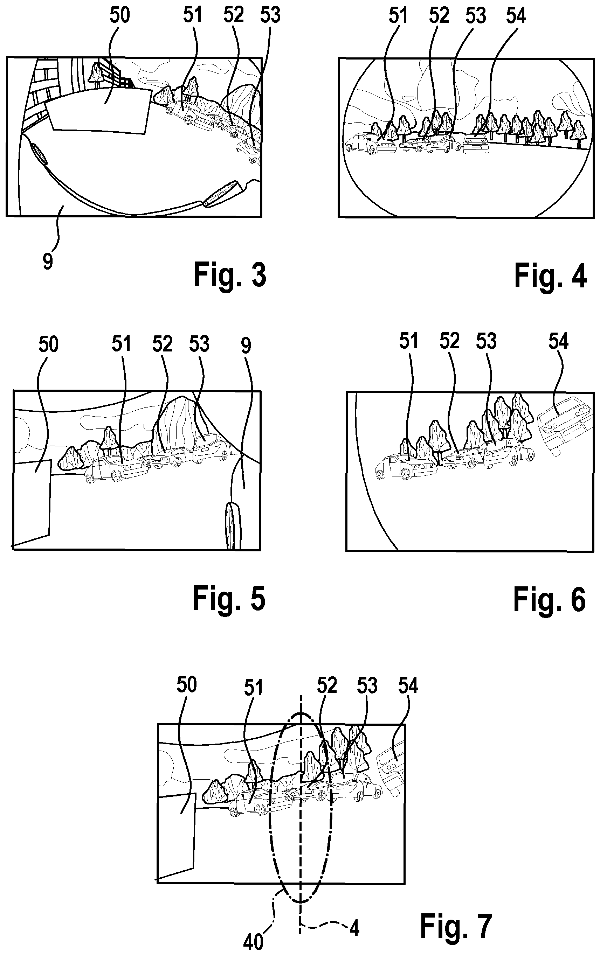

Figur 3 zeigt eine Aufnahme, welche mittels einer Seitenkamera eines (Ego-) Fahrzeugs 9 gemacht wurde. Darin enthalten sind ein Mauerstück 50 sowie drei Fremdfahrzeuge 51, 52, 53.

Figur 4 zeigt dieselbe Situation des Fahrzeugs 9 aus der Perspektive einer Frontkamera des Fahrzeugs 9. Enthalten sind nur noch die Fahrzeuge 51, 52, 53 der auch in Figur 3 dargestellten Anordnung, während das Mauerwerk 50 nicht mehr enthalten ist. Zusätzlich ist ein weiteres Fahrzeug 54 in der Aufnahme der Figur 4 enthalten.

Figur 5 zeigt einen Ausschnitt der in Figur 3 dargestellten Aufnahme nach einer Entzerrung der Aufnahme.

Figur 6 zeigt einen Ausschnitt der in Figur 4 dargestellten Aufnahme nach einer Entzerrung der Aufnahme.

Figur 7 zeigt eine aus den Figuren 5 und 6 an einer Fügegrenze 4 zusammengesetzte Aufnahme. Hierbei wurde ein "Alphablending" zur Angleichung der Bildbestandteile im Bereich 40 der Fügegrenze 4 verwendet.

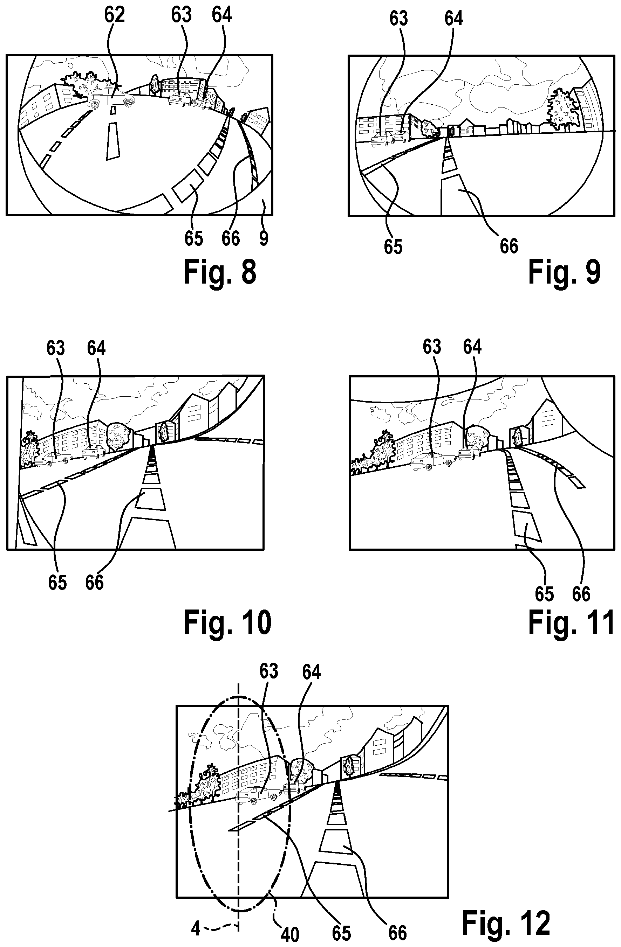

Figur 8 zeigt eine Aufnahme einer Seitenkamera eines Fahrzeugs 9, in welcher drei Fremdfahrzeuge 62, 63, 64 sowie unterschiedliche Fahrbahnmarkierungen 65, 66 erkennbar sind.

Figur 9 zeigt eine Randaufnahme, welche mittels einer Frontkamera des Fahrzeugs 9 in der gleichen Fahrsituation, wie sie in Figur 8 dargestellt ist, aufgenommen wurde. Zwei der Fahrzeuge 63, 64 sind auch in der Aufnahme nach Figur 9 enthalten. Ebenfalls sind die Fahrbahnmarkierungen 65, 66 erkennbar.

Figur 10 zeigt die in Figur 8 dargestellte Aufnahme, nachdem sie einer Entzerrung unterzogen wurde.

Figur 11 zeigt die in Figur 9 dargestellte Aufnahme, nachdem sie einer Entzerrung unterzogen wurde.

Figur 12 zeigt eine an einer Fügelinie 4 aus den Figuren 10 und 11 zusammengesetzte Ansicht. Hierbei wurde die Fügelinie 4 automatisch in einen Bereich 40 verschoben, in welchem ein hohes Maß an Ähnlichkeit zwischen den in den Figuren 10 und 11 dargestellten Bildern erkannt wurde. Obwohl das mittels der Seitenkamera des Fahrzeugs 9 aufgenommene Bild (siehe Figur 8) lediglich zu einem kleinen Flächenanteil in Figur 12 beiträgt, wird ein für den Fahrer des Fahrzeugs 9 besser geeignetes zusammengesetztes Bild erzeugt, als dies nach dem Stand der Technik der Fall gewesen wäre.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

## Patentansprüche

1. Verfahren zum Zusammenfügen mittels mehrerer optischer Sensoren (1, 2) aufgenommener Bilder umfassend
- Aufnehmen (100) eines ersten Bildes mittels eines ersten optischen Sensors (1),
- Aufnehmen (100) eines zweiten Bildes (Figur 4; Figur 9) mittels eines zweiten optischen Sensors (2), wobei das Verfahren die folgenden Schritte aufweist
- Analysieren (200) optischer Inhalte des ersten Bildes und des zweiten Bildes,
- Identifizieren, im Analyseschritt (200), eines auf einer bisher zum Verbinden des ersten Bildes und des zweiten Bildes verwendeten Fügegrenze (4) liegenden Objektes (5),
- Ermitteln (300), dass das identifizierte Objekt (5) einen vordefinierten maximalen Abstand (Dₘₐₓ) von dem aufnehmenden ersten Sensor (1) und/oder dem zweiten Sensor (2) oder zu einem Fortbewegungsmittel (9) ist, an welchem der erste optische Sensor (1) und der zweite optische Sensor (2) fest angeordnet sind, unterschreitet, das Verfahren **gekennzeichnet durch**: - Anschließendes Definieren (500)
- einer neuen Fügegrenze (4) zum Zusammenfügen des ersten Bildes und des zweiten Bildes, wobei die neue Fügegrenze (4) von einer zuvor verwendeten Fügegrenze (3) abweicht, wobei die neue Fügegrenze (4) kein Objekt (5) aufweist, welches den vordefinierten maximalen Abstand (Dₘₐₓ) unterschreitet, und die neue Fügegrenze (4) automatisch in einen Bereich (40) verschoben wird, in welchem im Analyseschritt (200) ein hohes Maß an Ähnlichkeit zwischen den dargestellten Bildern erkannt wurde.

2. Verfahren nach Anspruch 1, wobei die neue Fügegrenze (4) so definiert (500) wird, dass auf ihr kein abgebildetes Objekt (5) angeordnet ist, welches den vordefinierten maximalen Abstand (Dₘₐₓ) unterschreitet.

3. Verfahren nach einem der vorstehenden Ansprüche, wobei das erste Bild und das zweite Bild zur Visualisierung einer Situation eines Fortbewegungsmittels (9), insbesondere eines Straßenfahrzeugs, dienen.

4. Verfahren nach einem der vorstehenden Ansprüche, wobei das erste Bild und das zweite Bild in einer jeweiligen Video-Datei zur Wiedergabe bewegter Bilder enthalten sind.

5. System zum Zusammenfügen mittels mehrerer optischer Sensoren (1, 2) aufgenommener Bilder umfassend:
- einen ersten optischen Sensor (1),
- einen zweiten optischen Sensor (2), und
- eine Auswerteeinheit (8), wobei
die Auswerteeinheit (8) eingerichtet ist, ein Verfahren nach einem der vorstehenden Ansprüche auszuführen.

6. System nach Anspruch 5, wobei der erste optische Sensor (1) einen ersten Erfassungsbereich (6) aufweist, welcher mit einem zweiten Erfassungsbereich (7) des zweiten Sensors (2) nur teilweise übereinstimmt.

7. System nach Anspruch 5 oder 6, wobei der erste optische Sensor (1) einen ersten Erfassungsbereich (6) aufweist, welcher mit einem zweiten Erfassungsbereich (7) des zweiten Sensors (2) überwiegend nicht übereinstimmt.

8. Fortbewegungsmittel umfassend ein System nach einem der Ansprüche 5 bis 7.

## Claims

1. Method for joining images recorded using a plurality of optical sensors (1, 2), comprising:
- recording (100) a first image using a first optical sensor (1),
- recording (100) a second image (Figure 4; Figure 9) using a second optical sensor (2),
wherein the method includes the steps of
- analysing (200) optical contents of the first image and of the second image,
- identifying an object (5) located on a joining boundary (4), which was previously used to connect the first image and the second image, in analysis step (200),
- ascertaining (300) that the identified object (5) falls short of a predefined maximum distance (Dₘₐₓ) from the recording first sensor (1) and/or the second sensor (2) or from a means of transport (9) on which the first optical sensor (1) and the second optical sensor (2) are fixedly mounted, the method being **characterized by**:
- subsequently defining (500) a new joining boundary (4) for joining together the first image and the second image, wherein the new joining boundary (4) deviates from a previously used joining boundary (3), wherein the new joining boundary (4) does not have an object (5) that falls short of the predefined maximum distance (Dₘₐₓ) , and the new joining boundary (4) is automatically moved into a region (40) in which a high degree of similarity between the images presented was determined in the analysis step (200) .

2. Method according to Claim 1, wherein the new joining boundary (4) is defined (500) such that no depicted object (5) that falls short of the predefined maximum distance (Dₘₐₓ) is arranged on it.

3. Method according to one of the preceding claims, wherein the first image and the second image serve to visualize a situation of a means of transport (9), in particular of a road vehicle.

4. Method according to one of the preceding claims, wherein the first image and the second image are contained in a respective video file for reproducing moving images.

5. System for joining images recorded using a plurality of optical sensors (1, 2), comprising:
- a first optical sensor (1),
- a second optical sensor (2), and
- an evaluation unit (8), wherein
the evaluation unit (8) is set up to carry out a method according to one of the preceding claims.

6. System according to Claim 5, wherein the first optical sensor (1) has a first capturing region (6) that only partially coincides with a second capturing region (7) of the second sensor (2).

7. System according to Claim 5 or 6, wherein the first optical sensor (1) has a first capturing region (6) that predominantly does not coincide with a second capturing region (7) of the second sensor (2).

8. Means of transport comprising a system according to one of Claims 5 to 7.

## Revendications

1. Procédé d'assemblage d'images prises au moyen de plusieurs capteurs optiques (1, 2) consistant à
- prendre (100) une première image au moyen d'un premier capteur optique (1),
- prendre (100) une deuxième image (Figure 4 ; Figure 9) au moyen d'un deuxième capteur optique (2),
dans lequel le procédé comprend les étapes consistant à
- analyser (200) les contenus optiques de la première image et de la deuxième image,
- identifier, lors de l'étape d'analyse (200), un objet (5) situé sur une limite de jonction (4) préalablement utilisée pour joindre la première image et la deuxième image,
- déterminer (300) que l'objet identifié (5) est à moins d'une distance maximale prédéfinie (Dₘₐₓ) du premier capteur (1) effectuant la prise et/ou du deuxième capteur (2) ou d'un moyen de transport (9) sur lequel sont disposés de manière fixe le premier capteur optique (1) et le deuxième capteur optique (2), le procédé étant **caractérisé par** les étapes consistant à
- définir ensuite (500) une nouvelle limite de jonction (4) pour assembler la première image et la deuxième image,
dans lequel la nouvelle limite de jonction (4) s'écarte d'une limite de jonction précédemment utilisée (3), dans lequel la nouvelle limite de jonction (4) ne comporte aucun objet (5) dont la distance est inférieure à la distance maximale prédéfinie (Dₘₐₓ), et la nouvelle limite de jonction (4) est automatiquement décalée vers une zone (40) dans laquelle un degré élevé de ressemblance entre les images représentées a été détecté lors de l'étape d'analyse (200).

2. Procédé selon la revendication 1, dans lequel la nouvelle limite de jonction (4) est définie (500) de telle sorte qu'aucun objet représenté (5) dont la distance est inférieure à la distance maximale prédéterminée (Dₘₐₓ) ne soit disposé sur celle-ci.

3. Procédé selon l'une des revendications précédentes, dans lequel la première image et la deuxième image servent à visualiser la situation d'un moyen de transport (9), en particulier d'un véhicule routier.

4. Procédé selon l'une des revendications précédentes, dans lequel la première image et la deuxième image sont contenues dans un fichier vidéo respectif destiné à reproduire des images animées.

5. Système d'assemblage d'images prises par plusieurs capteurs optiques (1, 2), comprenant :
- un premier capteur optique (1),
- un deuxième capteur optique (2), et
- une unité d'évaluation (8), dans lequel
l'unité d'évaluation (8) est conçue pour mettre en œuvre un procédé selon l'une des revendications précédentes.

6. Système selon la revendication 5, dans lequel le premier capteur optique (1) présente une première zone de détection (6) qui ne coïncide que partiellement avec une deuxième zone de détection (7) du deuxième capteur (2).

7. Système selon la revendication 5 ou 6, dans lequel le premier capteur optique (1) présente une première zone de détection (6) qui, en majeure partie, ne coïncide pas avec une deuxième zone de détection (7) du deuxième capteur (2).

8. Moyens de transport comprenant un système selon l'une des revendications 5 à 7.
